(19) **Europäisches Patentamt European Patent Office Office européen des brevets**

(11) **EP 2 115 451 B1**

(12) **FASCICULE DE BREVET EUROPEEN**

(45) Date de publication et mention de la délivrance du brevet:
**11.09.2013 Bulletin 2013/37**

(21) Numéro de dépôt: **08708197.2**

(22) Date de dépôt: **25.01.2008**

(51) Int Cl.:
**G01N 29/036** *(2006.01)*    **G01N 29/28** *(2006.01)*
**G21C 17/10** *(2006.01)*    **G01L 11/06** *(2006.01)*

(86) Numéro de dépôt international:
**PCT/EP2008/050864**

(87) Numéro de publication internationale:
**WO 2008/095793 (14.08.2008 Gazette 2008/33)**

(54) **PROCEDE DE MESURE DE LA PRESSION ET/OU DE LA MASSE MOLAIRE D'UN GAZ DANS UNE ENCEINTE, ET ENSEMBLE DE MESURE CORRESPONDANT**

VERFAHREN ZUR MESSUNG DES DRUCKS UND/ODER MOLMASSE EINES GASES IN EINEM GEHÄUSE SOWIE ENTSPRECHENDE MESSANORDNUNG

METHOD FOR MEASURING THE PRESSURE AND/OR MOLAR MASS OF A GAS IN A HOUSING, AND CORRESPONDING MEASUREMENT ASSEMBLY

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.01.2007 FR 0752922**

(43) Date de publication de la demande:
**11.11.2009 Bulletin 2009/46**

(73) Titulaires:
• **Electricité de France**
**75008 Paris (FR)**
• **Centre National de la Recherche Scientifique (CNRS)**
**75016 Paris (FR)**
• **Université Montpellier 2 Sciences et Techniques**
**34000 Montpellier (FR)**

(72) Inventeurs:
• **BARON, Daniel**
**F-04100 Manosque (FR)**
• **FERRANDIS, Jean-Yves**
**F-34980 Saint Gely Dufesc (FR)**
• **LEVEQUE, Gérard**
**F-34080 Montpellier (FR)**
• **LAUX, Didier**
**F-30820 Caveirac (FR)**
• **ROSENKRANTZ, Eric**
**F-37730 Prades Le Lez (FR)**

(74) Mandataire: **Regimbeau**
**20, rue de Chazelles**
**75847 Paris Cedex 17 (FR)**

(56) Documents cités:
**WO-A-00/73781        FR-A1- 2 739 925**
**US-A- 4 869 097        US-A1- 2005 268 703**

**Description**

DOMAINE TECHNIQUE GENERAL

La présente invention concerne un procédé selon le préambule de la revendication 1.

ETAT DE L'ART

On souhaite pouvoir accéder à la valeur de la pression dans une enceinte cylindrique remplie d'un mélange gazeux, par exemple pour la mesure de la pression interne d'un crayon de combustible d'un réacteur de centrale nucléaire.

On souhaite également déterminer la masse molaire du mélange gazeux précité.

Pour accéder à ce type d'informations, il faut en général utiliser des méthodes destructives - comme le perçage de l'enceinte.

On peut également utiliser des méthodes fondées sur la présence d'un gaz traceur radioactif (comme le Krypton 85 par exemple). Or ces dernières méthodes ne sont pas applicables lorsque l'on veut mesurer la pression dans un tube faisant partie d'un faisceau de tubes contenant le même traceur radioactif.

On connaît par FR 2 739 925 un capteur acoustique comportant :

- au moins un transducteur générant une onde acoustique et/ou recevant une onde acoustique en retour ;
- un barreau de verre pour transmettre les ondes acoustiques, et
- une couche liquide de couplage du capteur avec le crayon, la couche étant d'épaisseur définie $\lambda/4$, $\lambda$ correspondant au double de l'épaisseur acoustique de la paroi du crayon.

Le capteur permet de déduire la pression de gaz dans le volume libre du crayon combustible, grâce à l'amplitude des ondes réfléchies dans le transducteur.

Le capteur présente cependant des inconvénients.

Tout d'abord, il ne permet que de mesurer la pression du gaz, et pas sa masse molaire.

De plus, la couche liquide de couplage en $\lambda/4$ permet une bonne transmission des ondes acoustiques dans le crayon, mais seulement dans un petit intervalle de fréquences autour de la fréquence de résonance d'un empilement formé par le capteur et le crayon.

En outre, l'amplitude des résonances du gaz est bien entendu sensible à la pression, mais aussi à des perturbations ou à des grandeurs mal connues, comme l'absorption du gaz ou les défauts des parois du crayon. Ainsi, même après étalonnage, la précision des mesures reste faible.

Enfin, la méthode de mesure ne permet pas de travailler avec des crayons contenant un objet induisant une dispersion des ondes, tel qu'un ressort.

Par ailleurs, WO 00/73781 divulgue une technique de caractérisation d'enceinte par un capteur à distance (et non en contact comme dans FR 2 739 925) travaillant grâce à des vibrations de l'enceinte (et non du gaz comme dans FR 2 739 925) et de plus dans des domaines de fréquences très inférieurs à ceux divulgués par FR 2 739 925.

PRESENTATION DE L'INVENTION

L'invention propose de pallier au moins un des inconvénients précités.

A cet effet, on propose selon l'invention un procédé selon la revendication 1.

L'invention est avantageusement complétée par les caractéristiques reprises dans les revendications dépendantes 2 à 6.

L'invention présente de nombreux avantages.

Le nouveau couplage « capteur - enceinte » est conçu pour permettre une transmission dans une bande spectrale beaucoup plus large que celle de l'art antérieur. L'empilement acoustique formé par l'enceinte, la couche de couplage et le transducteur peut vibrer dans une large bande de fréquences. Préférentiellement, la largeur de la bande doit atteindre 1 MHz pour les parois d'enceinte en alliage de zirconium actuelles vibrant au voisinage de 4MHz, soit 25% en valeur relative.

Le capteur large bande permet d'exciter de nombreuses résonances du gaz. Le fait d'exciter de nombreuses résonances du gaz permet, par effet de moyenne dans un traitement adapté (utilisant notamment l'intégrale J de la réponse spectrale du gaz), de s'affranchir de l'absorption du gaz, et en grande partie des imperfections de l'enceinte.

Le capteur permet d'accroître notablement la précision sur la mesure de pression.

Le capteur et le procédé de mesure associé autorisent des mesures sur des enceintes contenant un ressort, l'effet de ce dernier étant alors simplement considéré comme une atténuation supplémentaire.

De plus, le procédé de mesure en large bande permet d'augmenter la précision de la mesure de la célérité des ondes acoustiques, et également celle de la masse molaire du mélange gazeux.

Le capteur et le procédé de mesure ont de nombreuses applications.

Ils permettent des tests sur des crayons de combustible nucléaire, en service et en entreposage.

Ils permettent des mesures non destructives de la pression et de la masse molaire de gaz dans les crayons combustibles nucléaires, notamment contenant un mélange gazeux Hélium, Xénon et Krypton principalement. La mesure est opérée sur la partie haute du crayon, dans la chambre d'expansion de la colonne combustible, au niveau du ressort de maintien.

Le procédé de mesure peut être mis en oeuvre en piscine aux inter-cycles, pendant les arrêts de tranche. Le capteur permet alors de :

- détecter un ou plusieurs crayons de combustible non étanches dans un assemblage comportant une pluralité de crayons ;
- aider à la décision pour un rechargement de l'assemblage des centrales ;
- aider à la décision avant la mise en entreposage réversible ;
- incrémenter la base statistique de support à la simulation numérique.

La mise en oeuvre pour des examens non destructifs en cellule chaude (cellules blindées pour opérer sur des matériaux actifs), avec les mêmes objectifs, est également possible.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- Les figures 1A et 1B représentent schématiquement deux modes de mises en oeuvre, sur une enceinte, d'exemples de capteurs utilisés dans le procédé selon l'invention, chaque capteur et l'enceinte formant alors un empilement acoustique ;
- La figure 2 représente schématiquement l'impédance électrique de l'empilement acoustique précité en fonction de la fréquence ;
- La figure 3A représente une courbe des parties Réelle et Imaginaire de la tension non filtrée en fonction de la fréquence ;
- La figure 3B représente un exemple de réponse des résonances du gaz qui apparaissent redressées, la réponse du transducteur, de la couche de couplage et de l'enceinte 1 étant retirée ;
- La figure 4 représente schématiquement les étapes principales d'un exemple d'un procédé de mise en oeuvre du capteur ; et
- La figure 5 est un exemple d'une courbe d'étalonnage du capteur.

Sur l'ensemble des figures, les éléments similaires portent des références numériques identiques.

DESCRIPTION DETAILLEE

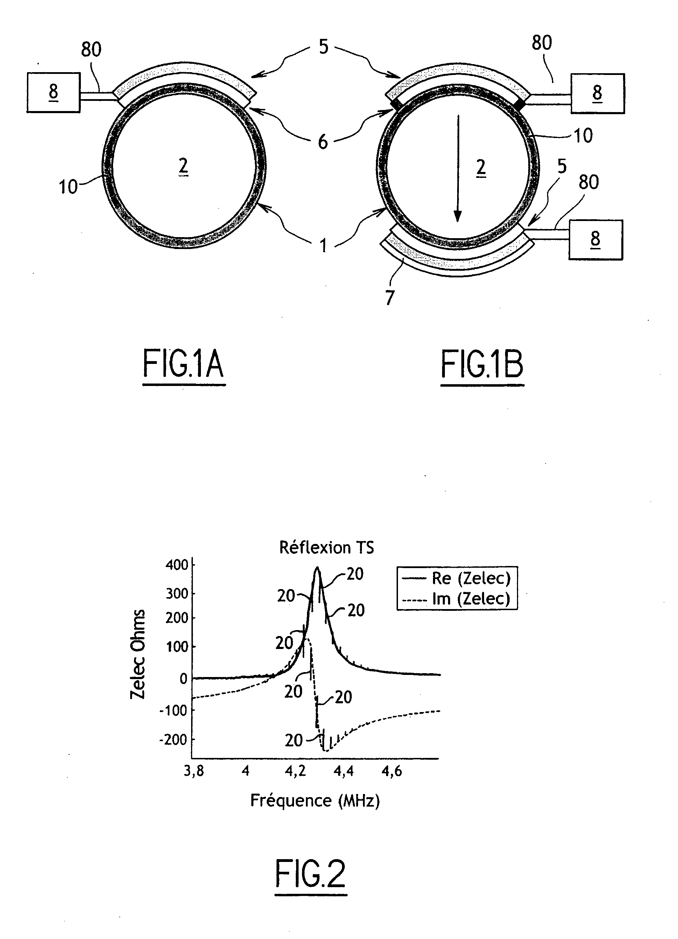

On a représenté schématiquement sur les figures 1A et 1B une enceinte 1 refermant un gaz 2.

L'enceinte 1 est par exemple un crayon de combustible et le gaz 2 est par exemple de l'hélium ou un mélange de gaz.

L'enceinte 1 porte un capteur acoustique.

Le capteur couplé à l'enceinte forme donc un ensemble formé d'une part du capteur et d'autre part de l'enceinte.

Le capteur acoustique permet la mesure d'au moins un paramètre physique du gaz 2, comme par exemple la pression du gaz dans l'enceinte et/ou sa masse molaire.

Le capteur acoustique comporte :

- au moins un transducteur 5 pour
d'une part générer un signal acoustique faisant vibrer l'enceinte et le gaz, et
d'autre part détecter un signal acoustique de réponse caractéristique des vibrations du gaz et de l'enceinte;
- une couche de couplage 6 entre le transducteur 5 et l'enceinte 1 ;
- un système 8 électrique qui est relié au transducteur 5 et qui permet :

l'excitation dudit transducteur 5, et
l'analyse des signaux de réponse.

En général, l'enceinte est de forme cylindrique de révolution - c'est le cas notamment des crayons de combustibles par exemple.

On comprend cependant que l'enceinte peut être de forme cylindrique quelconque, comme par exemple à faces planes parallèles.

Dans le cas d'une forme cylindrique de révolution, préférentiellement, tous les éléments du capteur sont concentriques.

Le transducteur 5 peut comporter un dos 7. Le dos 7, ayant des capacités de réflexion ou d'absorption des signaux acoustiques, a une influence sur les propriétés acoustiques du capteur. L'utilisation de dos résonnants ne doit pas perturber la bande spectrale d'utilisation du capteur.

Le système 8 transmet des signaux électriques au transducteur 5. Le transducteur 5 convertit les signaux électriques en signaux acoustiques, et réciproquement. A cet effet, le transducteur 5 est classiquement du type piézoélectrique (par exemple un matériau PZT - Plomb Zirconium Titane oxyde).

La couche 6 de couplage peut prendre plusieurs formes, comme un liquide ou un solide. Elle est contenue dans le volume défini par la face interne du transducteur 5, la face externe de l'enceinte 1 et des cales 9 interposées entre ces deux faces. Les cales 9 sont optionnelles dans le cas d'une couche 6 solide.

Dans le cas d'une couche 6 solide, il faut veiller à la bonne transmission des ondes acoustiques aux interfaces, soit par des collages, soit par des couplants liquides en couche très mince. Si l'effet de ces couches minces n'est pas négligeable, il convient de les inclure dans les temps de transit recommandé dans le tableau 1 ci-dessous.

Lorsque le capteur est placé sur l'enceinte 1, on est alors en présence d'un empilement acoustique constitué de la paroi 10 de l'enceinte 1, de la couche de couplage 6 et du transducteur 5. La paroi 10 de l'enceinte 1 et le transducteur 5 ont une forte impédance acoustique, tandis que le gaz 2 et la couche 6 de couplage ont une faible impédance acoustique.

Conformément à l'invention, les diverses épaisseurs de matériaux piézoélectrique 5 et de la couche de couplage 6 sont accordées à la fréquence de résonance libre de la paroi 10.

Cet accord se définit en fonction des temps de traversée de la couche 6 par les ondes acoustiques.

Soit $T_{10}$ le temps de traversée de la paroi 10 de l'enceinte 1 par les ondes acoustiques, $T_{10} = e_{enceinte} / c_{enceinte}$, avec $e_{enceinte}$ et $c_{enceinte}$ respectivement l'épaisseur de la paroi et la célérité des ondes acoustiques dans la paroi. La première période de résonance libre de cette paroi est alors $2T_{10}$. On appelle cette résonance le mode $\lambda/2$.

Soit $T_5$ le temps de traversée du transducteur 5 par les ondes acoustiques. Le transducteur 5 doit vibrer dans le même mode $\lambda/2$ à la même fréquence que la paroi 10, donc l'épaisseur du transducteur 5 est telle que $T_5$ égale $T_{10}$.

L'impédance acoustique du transducteur est de l'ordre de $30\ 10^6$ Pa.s.m$^{-3}$ pour du PZT.

L'épaisseur de la couche de couplage 6 est aussi déterminée à partir de $T_{10}$. Plusieurs cas sont envisageables.

Tableau 1

| Impédance acoustique de la couche de couplage en $10^6$ SI (Pa.s.m$^{-3}$) | Temps de transit $T_6 = [n-(1/2)]T_{10}$ | Temps de transit $T_6 = nT_{10}$ |
|---|---|---|
| $0.5 < Z < 3$ | bande étroite | large bande |
| $3 < Z < 15$ | large bande | |

n est un entier, de préférence égal à 1

Le cas d'un temps de transit $T_6$ égal à $T_{10}/2$ (épaisseur dite $\lambda/4$) dans de l'eau (Z = $1.5\ 10^6$ SI) correspond au capteur divulgué dans FR 2 739 925. C'est un système à « bande étroite ».

La précision réalisée sur les temps de transit doit être de $\pm$ 20% sur un montage standard; mais plus le temps de transit se rapproche des conditions du tableau, meilleure sera la reproductibilité des mesures, car on se situe alors sur un extremum de la réponse du capteur.

Ces précisions donnent, pour une couche de couplage ayant une impédance acoustique comprise entre $0.5\ 10^6$ et $3\ 10^6$ SI (cas des liquides par exemple), une épaisseur acoustique comprise entre $0.4\lambda$ et $0.6\lambda$, où $\lambda$ est la longueur d'onde, dans la couche de couplage, à la fréquence $f_0$ de vibration libre d'une paroi 10 de l'enceinte 1, avec $f_0 = c_{enceinte} / (2\ e_{enceinte})$.

De même, pour une couche 6 de couplage ayant une impédance acoustique comprise entre $3\ 10^6$ et $15\ 10^6$ SI (cas des solides par exemple), on obtient une épaisseur acoustique de la couche comprise entre $0.2\lambda$ et $0.3\lambda$, où $\lambda$ est la longueur d'onde, dans la couche de couplage, à la fréquence $f_0$ de vibration libre d'une paroi 10 de l'enceinte 1.

La figure 2 montre l'impédance d'un capteur travaillant en réflexion (cas de montage de la figure 1A). Une bande de largeur de 0.3 MHz pour une fréquence centrale - c'est à dire une fréquence de résonance de la paroi 10 libre - de 4 MHz correspond à un capteur peu satisfaisant.

Préférentiellement, la largeur de la bande est de l'ordre de 20 % de la fréquence de résonance centrale, voire 25%.

Les deux cas marqués « large bande » correspondent au capteur large bande selon l'invention. Le capteur acoustique est conçu pour avoir une sensibilité dans une large bande spectrale plutôt qu'une sensibilité élevée à une seule fréquence.

De façon plus générale, on appelle « large bande » une largeur de la bande de fréquences qui est telle qu'au moins deux, préférentiellement de l'ordre de dix, résonances du gaz sont générées.

En d'autres termes, le capteur acoustique est caractérisé en ce que sa bande de fréquences de transmission des signaux acoustiques a une largeur L telle que :

$$L \geq \frac{c}{D}$$

où c est la célérité des ondes acoustiques dans le gaz de l'enceinte, et

D est la dimension intérieure de l'enceinte,
la bande de fréquences de transmission étant centrée autour de $f_o$, où $f_0$ est la fréquence de vibration libre d'une paroi de l'enceinte à laquelle le capteur est couplé lors d'une mesure $f_0$.

La partie électrique du capteur va maintenant être rapidement décrite. Le transducteur 5 est par exemple une tuile en PZT (Plomb Zirconium Titane oxyde). Le transducteur 5 peut également être un composite piézoélectrique polymère. Ces transducteurs peuvent élargir la bande spectrale d'utilisation du capteur, en diminuant le facteur de qualité du capteur.

Le transducteur 5 est relié au système 8 par des fils conducteurs 80.

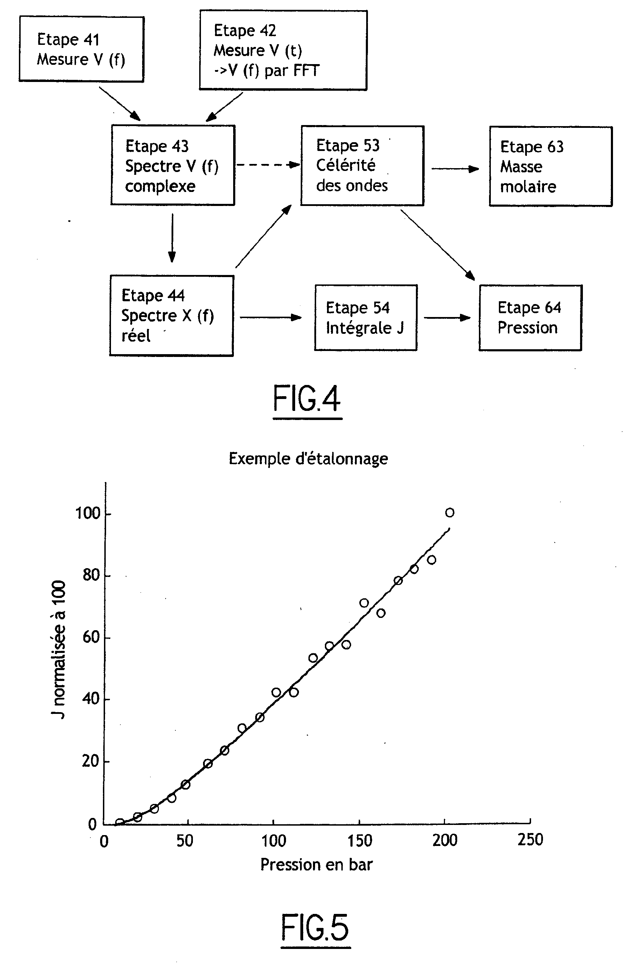

Le système 8 comporte d'une part un générateur de tension, et d'autre part des moyens de mesure de la tension électrique fournie par le capteur en fonction de la fréquence V(f), ou de sa réponse temporelle V(t) à une impulsion de tension. Ces mesures permettent de déterminer la pression et la masse molaire du gaz dans l'enceinte, comme décrit ci-dessous en référence à la figure 4.

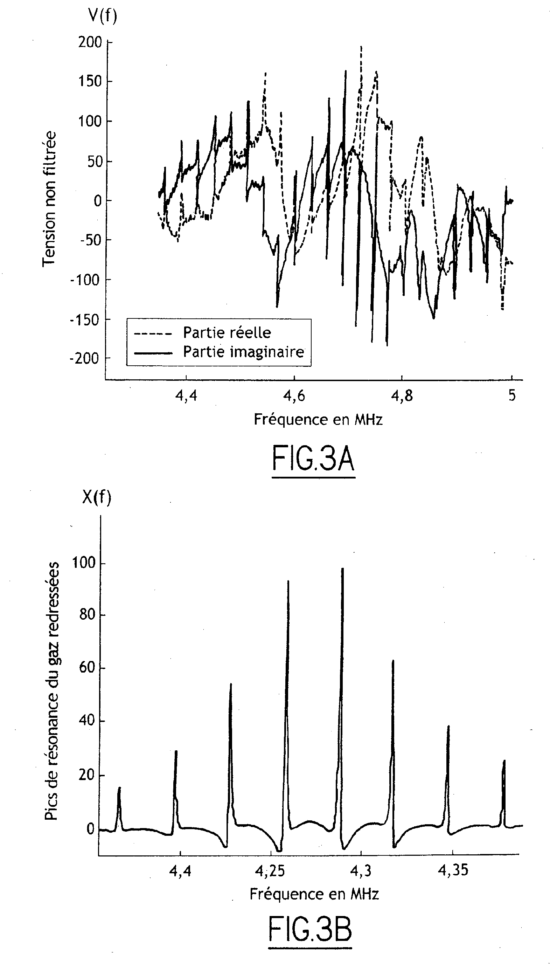

Une première étape 41 du procédé consiste par exemple à exciter le transducteur 5 grâce au système 8 avec une tension U sinusoïdale de fréquence ajustable dans le domaine utile. On en déduit un spectre de réponse fréquentielle de tension V(f) de la figure 3A.

Une autre possibilité pour la première étape (étape 42) consiste à exciter le transducteur 5 par une série d'impulsions. On obtient une tension V(t). Une transformation de Fourier des signaux électriques issus du transducteur 5 est nécessaire pour déduire un spectre de réponse fréquentielle V(f) du système comme précédemment.

Le spectre V(f) complexe (étape 43) constitue le point de départ du traitement de signal.

Le traitement du spectre issu des deux étapes ci-dessus est ensuite commun comme le montre la figure 4.

La réponse globale du capteur est composée des résonances du gaz 2 et des résonances du capteur acoustique couplé à l'enceinte 1.

Or, les résonances du gaz 2, étant dues aux ondes stationnaires radiales dans l'enceinte 1, sont périodiques en fonction de la fréquence. Elles sont donc facilement distinguables et séparables des autres résonances.

Les résonances dues au gaz 2 sont celles correspondant aux pics 20 sur les courbes de la figure 2.

Lors de l'étape 44, on effectue une transformation mathématique sur le spectre fréquentiel complexe de la figure 2 pour obtenir une courbe réelle X(f) dans laquelle les résonances du gaz apparaissent seules et redressées, les résonances du transducteur 5, de la couche 6 et de l'enceinte 1 étant retirées (comme sur la figure 3B). Ce traitement numérique de la réponse spectrale du capteur est nécessaire pour corriger les phases variables des résonances du gaz. Un des traitements possibles consiste à soustraire de V(f) les parties lentement variables (par fenêtrage dans l'espace temporel par exemple) puis à prendre le module du signal.

L'étape 53 consiste à mesurer l'écart $\Delta f$ entre au moins deux fréquences de résonance du gaz. On déduit ensuite dudit écart $\Delta f$, la célérité c des ondes acoustiques dans le gaz. Deux cas peuvent se présenter selon que la mesure se fait avec un ou deux capteurs.

1/ Sur la figure 1A, le transducteur 5 est unique et travaille « en réflexion ». Il génère les ondes acoustiques vers l'enceinte et reçoit les ondes acoustiques issues de l'enceinte 1. Dans ce cas, la célérité c des ondes acoustiques dans le gaz est déduite par :

$$c = 2D\Delta f$$

où D est le diamètre intérieur de l'enceinte dans le cas d'une enceinte cylindrique de révolution. Dans le cas d'une enceinte à faces planes parrallèles, on comprend que D fait référence à la dimension intérieure que traversent les ondes entre deux parois de l'enceinte.

2/ Sur la figure 1B, il est prévu de monter autour de l'enceinte deux capteurs, positionnés de façon symétrique de part et d'autre de l'enceinte 1. Un transducteur 5 génère un signal acoustique d'excitation faisant vibrer l'enceinte et le gaz et un autre transducteur 5 détecte la vibration réponse. L'intérêt de ce montage est de séparer le signal d'excitation et le signal de réponse. Dans ce cas, la célérité c des ondes acoustiques dans le gaz est déduite par :

$$c = D\Delta f$$

Dans les deux cas, une meilleure précision est atteinte si on mesure l'écart $\Delta f$ entre plusieurs résonances (moyenne de plusieurs écarts entre les pics 20 de la figure 2 par exemple), ou si on détermine l'écart $\Delta f$ par un traitement mathématique des positions des résonances (un des traitements possibles est de type transformée de Fourier par exemple), d'où la nécessité d'avoir un système pouvant exciter le gaz dans une large bande spectrale.

L'étape 53 peut s'effectuer sur le spectre complexe V(f) issu de l'étape 43, mais préférentiellement sur la réponse X(f) réelle issue de l'étape 44, pour laquelle des procédés de recherche de périodicité sont utilisables.

Dans l'étape 63, on peut calculer la masse molaire M du gaz à partir de la célérité c déduite de l'étape 53:

$$M = \frac{\gamma RT}{c^2}$$

où R est la constante des gaz parfaits, $\gamma$ est le rapport des chaleurs spécifiques pour les gaz parfaits, et T est la température.

La relation ci-dessus est valable pour les gaz parfaits. Dans le cas d'un mélange de gaz, des corrections issues de l'équation des gaz réels peuvent être introduites.

Dans le cas d'un mélange binaire de gaz monoatomiques tel qu'un mélange Hélium-Xénon, la mesure de la masse molaire permet une déduction immédiate de la composition massique x du mélange, car :

$$M = xM_{Xe} + (1-x)M_{Hc}$$

Où Mxe et $M_{He}$ sont les masses atomiques du xénon et de l'hélium.

L'étape 54 permet la mesure de la pression du gaz. Le principe de mesure est le suivant.

L'amplitude des résonances du gaz observée sur la réponse X(f) de la figure 3B est proportionnelle à l'impédance acoustique du gaz dans la l'enceinte 1 et permet de déduire la pression grâce aux étapes explicitées ci-dessous.

L'impédance acoustique $Z_{gaz}(f)$ du gaz par exemple dans une cavité rigide à faces planes parallèles s'écrit :

$$Z_{gaz}(f) = \frac{\rho c}{i \tan(kD)}$$

où $\rho$ est la masse volumique du gaz,
$c$ est la célérité du gaz,
$i^2 = -1$,

$$k = \frac{2\pi f}{c} - i\alpha \;,$$

$\alpha$ est le coefficient d'absorption du gaz, et
$D$ est la dimension intérieure de l'enceinte

L'intégrale $\mathcal{I}$ de l'impédance acoustique du gaz, pour une résonance, a la propriété d'être indépendante de l'absorption du gaz. Elle s'exprime en effet par :

$$I = \int Z_{gaz} df = \frac{\rho c^2}{2D}$$

Bien entendu, l'amplitude des résonances du gaz observée sur la courbe X(f) n'est pas une mesure de l'impédance du gaz mais est modulée par la sensibilité relative S(f) du capteur, fonction qui dépend de la fréquence. On ne peut donc pas déduire la pression d'une mesure sur une seule résonance du gaz.

La sensibilité relative S(f) du capteur étant une caractéristique stable du capteur, la somme des intégrales *I* pour toutes les résonances présentes dans la fenêtre d'observation du capteur, grandeur appelée STG (Sensibilité Totale au Gaz), est une grandeur dépendant seulement du gaz.

$$STG = I \sum_n S_n$$

où $S_n$ est la sensibilité relative du capteur pour la nième fréquence de résonance du gaz.

Cette grandeur n'a pas besoin d'être connue précisément, car le capteur nécessite un étalonnage. Dans le cas idéal où le capteur est sensible dans une fenêtre de largeur F, dans laquelle la sensibilité serait constante égale à S, alors

$$STG = mIS$$

où m est le nombre de résonances présentes dans la fenêtre.

Comme les résonances sont distantes de $\Delta f = \dfrac{c}{2D}$ , alors 2D

$$m = \frac{F}{\Delta f} = \frac{2DF}{c}$$

Pour les gaz parfaits : $PV = nRT$ , $\rho = \dfrac{nM}{V}$ d'où $\rho c = \gamma \dfrac{P}{c}$

La sensibilité totale au gaz devient :

$$STG = FS\rho c = FS\gamma \frac{P}{c}$$

où $\gamma$ est le rapport des chaleurs spécifiques pour les gaz parfaits.

Dans le cas idéal, la mesure de STG est proportionnelle à la pression du gaz. La nécessité d'avoir un capteur à large bande est nécessaire pour avoir de nombreuses résonances dans la fenêtre d'intégration et stabiliser l'intégrale.

Dans l'étape 54, par similitude avec le cas idéal ci-dessus, on calcule l'intégrale J de la réponse fréquentielle expérimentale X(f) dans le domaine F de sensibilité du capteur :

$$J_{théorique} = \int_F X(f) \cos(2\pi f nT)\, df = \chi \frac{P}{c}$$

Avec T, période fondamentale de résonance du gaz et n, ordre de l'harmonique choisi.

Le cas n=1 est le plus favorable.

Cette intégrale est proportionnelle P/c et permet une mesure de la pression P si on connaît la constante $\chi$.

Or la constante $\chi$ est caractéristique d'un capteur. Elle ne peut malheureusement être déduite avec assez de précision des dimensions et propriétés des matériaux du capteur.

De plus, une étude théorique et expérimentale de l'intégrale J montre que le raisonnement précédent n'est qu'une première approximation. L'intégrale J dépend en fait légèrement de l'absorption du gaz ce qui fait que la fonction J(P) n'est pas linéaire (voir figure 5). La fonction J(P) est quasi linéaire pour les hautes pressions (vers 100 bars), par contre la réponse du système disparaît pour les faibles pressions (<20 bars), car le gaz est très absorbant.

En conclusion, la fonction J(P,c) ne peut être obtenue que par un étalonnage préalable du capteur avec un gaz connu, en fonction de la pression P et de la nature du gaz (pour faire varier c). Pour une mesure sur un gaz inconnu, on déduit d'abord c dans l'étape 53, puis on déduit P à l'étape 64 de la lecture des courbes d'étalonnage obtenue avec le capteur utilisé, pour la vitesse c.

## Revendications

**1.** Procédé pour la mesure d'au moins un paramètre physique sur une enceinte (1) remplie d'un gaz (2), la mesure s'effectuant par l'intermédiaire d'un capteur acoustique,
le capteur acoustique comportant au moins un transducteur (5), un système (8) électrique relié au transducteur (5) et une couche de couplage (6) pour coupler le transducteur (5) à l'enceinte (1),
le procédé comportant les étapes consistant à :

- générer, grâce au transducteur (5), un signal acoustique d'excitation faisant vibrer l'enceinte (1) et le gaz (2) dans une large bande de fréquences,
- détecter, grâce au transducteur (5), un signal acoustique de réponse caractéristique des vibrations de l'enceinte et du gaz;
- analyser des signaux électriques de réponse issus du transducteur (5) grâce au système (8) ;

le procédé étant **caractérisé en ce qu'**il comporte les étapes consistant à, grâce au système (8) :

- mesurer les amplitudes des signaux électriques de réponse issus du transducteur (5) pour déterminer l'ensemble des fréquences de résonance du gaz (2);
- extraire les fréquences de résonance du gaz de l'ensemble des fréquences de résonance du capteur ;
- mesurer l'écart entre au moins deux fréquences de résonance du gaz ;
- déduire, grâce à la mesure dudit écart, la célérité c des ondes acoustiques dans le gaz ;
- calculer la masse molaire M du gaz par :

$$M = \frac{\gamma R T}{c^2}$$

où R est la constante des gaz parfaits, *T* est la température et $\gamma$ est le rapport des chaleurs spécifiques pour les gaz parfaits ; et/ou

- calculer l'intégrale J du signal acoustique de réponse réelle X(f) du gaz dans l'enceinte, où X(f) est une courbe réelle dans laquelle les résonances du gaz apparaissent seules et redressées, les résonances du transducteur (5), de la couche (6) et de l'enceinte (1) étant retirées ; et
- grâce en outre à la célérité déduite aux étapes précédentes, déduire la pression *P* du gaz à partir du calcul de l'intégrale J, grâce à un étalonnage préalable représentant la courbe J(P,c) pour un gaz de pression et de nature connues.

**2.** Procédé selon la revendication 1, comportant, dans le cas où le système (8) excite le transducteur (5) par une série d'impulsions temporelles, une étape de conversion, dans l'espace des fréquences, par transformation de Fourier, des signaux électriques temporels issus du transducteur (5).

**3.** Procédé selon l'une des revendications 1 ou 2, comportant une étape d'utilisation de la propriété selon laquelle les fréquences de résonance du gaz (2) dans l'enceinte (1) sont périodiques, pour extraire les fréquences de résonance du gaz dans l'enceinte.

**4.** Procédé selon l'une des revendications 1 à 3, dans lequel

- si le capteur comporte un seul transducteur (5) travaillant en réflexion, la célérité c des ondes acoustiques dans le gaz est déduite par :

$$c = 2D\Delta f$$

où D est la dimension intérieure de l'enceinte et où $\Delta f$ est l'écart entre deux fréquences de résonance du gaz, et ;
- si le capteur comporte deux transducteurs (5) travaillant en transmission, un transducteur générant un signal acoustique se propageant vers l'enceinte (1) et un autre transducteur détectant un signal acoustique de réponse, la célérité c des ondes acoustiques dans le gaz est déduite par :

$$c = D\Delta f .$$

5. Procédé selon l'une des revendications 1 à 4, dans lequel !'intégrale J de la réponse du capteur est calculée par :

$$J = \int_{F} X(f)\cos(2\pi f n T)df$$

Avec T, période fondamentale de résonance du gaz et n, ordre de l'harmonique choisi.
où F est la largeur fréquentielle de sensibilité du capteur et où X(f) est une courbe réelle dans laquelle les résonances du gaz apparaissent seules et redressées, les résonances du transducteur (5), de la couche (6) et de l'enceinte (1) étant retirées,
J étant significative de la pression, pression qui peut être déduite par étalonnage.

6. Procédé selon l'une des revendications 1 à 5, dans lequel la largeur de la bande de fréquences est telle qu'au moins deux, préférentiellement de l'ordre de dix, résonances du gaz sont générées.

**Patentansprüche**

1. Verfahren zum Messen wenigstens eines physikalischen Parameters an einem Behälter (1), der mit einem Gas (2) gefüllt ist, wobei die Messung mittels eines akustischen Sensors ausgeführt wird,
wobei der akustische Sensor wenigstens einen Schallwandler (5), ein mit dem Schallwandler (5) verbundenes elektrisches System (8) und eine Kopplungsschicht (6) zum Koppeln des Schallwandlers (5) mit dem Behälter (1) umfasst,
wobei das Verfahren die Schritte umfasst, die aus Folgendem bestehen:

- Erzeugen, durch den Schallwandler (5), eines akustischen Anregungssignals, das den Behälter (1) und das Gas (2) in einem breiten Frequenzband vibrieren lässt;
- Detektieren, durch den Schallwandler (5), eines akustischen Antwortsignals, das charakteristisch für die Vibrationen des Behälters und des Gases ist;
- Analysieren der elektrischen Antwortsignale, die vom Schallwandler (5) ausgegeben werden, mittels des Systems (8);
wobei das Verfahren **dadurch gekennzeichnet ist, dass** es, mittels des Systems (8), die Schritte umfasst, die aus Folgendem bestehen:
- Messen der Amplituden der vom Schallwandler (5) ausgegebenen elektrischen Antwortsignale, um die Gesamtheit der Resonanzfrequenzen des Gases (2) zu bestimmen;
- Trennen der Resonanzfrequenzen des Gases von der Gesamtheit der Resonanzfrequenzen des Sensors;
- Messen des Abstands zwischen wenigstens zwei Resonanzfrequenzen des Gases;
- Ableiten der Ausbreitungsgeschwindigkeit c der Schallwellen im Gas, und dies mittels der Messung des Abstands;
- Berechnen der molaren Masse M des Gases durch:

$$M = \frac{\gamma RT}{c^2}$$

wobei R die Gaskonstante für ideale Gase, T die Temperatur und $\gamma$ das Verhältnis der spezifischen Wärmekapazitäten für ideale Gase ist; und/oder

- Berechnen des Integrals J des reellen akustischen Antwortsignals X(f) des Gases im Behälter, wobei X(f) eine reelle Kurve ist, in der die Resonanzen des Gases allein und gleichgerichtet auftreten, wobei die Resonanzen des Schallwandlers (5), der Schicht (6) und des Behälters (1) entfernt sind; und

- mittels unter anderem der in den vorherigen Schritten abgeleiteten Ausbreitungsgeschwindigkeit, Ableiten des Druckes P des Gases basierend auf der Berechnung des Integrals J, und dies mittels einer vorherigen Kalibrierung, die eine Kurve J(P,c) für ein Gas mit bekanntem Druck und bekannter Beschaffenheit repräsentiert.

2. Verfahren nach Anspruch 1, das in dem Fall, dass das System (8) den Schallwandler (5) durch eine Folge zeitlicher Impulse anregt, einen Umwandlungsschritt in den Frequenzraum durch Fouriertransformation der vom Schallwandler (5) kommenden zeitlichen elektrischen Signale umfasst.

3. Verfahren nach einem der Ansprüche 1 oder 2, das einen Schritt zur Verwendung der Eigenschaft umfasst, dass die Resonanzfrequenzen des Gases (2) im Behälter (1) periodisch sind, um die Resonanzfrequenzen des Gases im Behälter zu erhalten.

4. Verfahren nach einem der Ansprüche 1 bis 3, bei dem

- falls der Sensor einen einzigen Schallwandler (5) umfasst, der in Reflexion arbeitet, die Ausbreitungsgeschwindigkeit c der Schallwellen im Gas durch Folgendes abgeleitet wird:

$$c = 2D\Delta f$$

wobei D die Innenabmessung des Behälters und $\Delta f$ der Abstand zwischen zwei Resonanzfrequenzen des Gases ist; und

- falls der Sensor zwei Schallwandler (5) umfasst, die in Transmission arbeiten, wobei ein Schallwandler ein akustisches Signal erzeugt, das sich in Richtung des Behälters (1) ausbreitet, und ein weiterer Schallwandler ein akustisches Antwortsignal detektiert, die Ausbreitungsgeschwindigkeit c der Schallwellen im Gas durch Folgendes abgeleitet wird:

$$c = D\Delta f.$$

5. Verfahren nach einem der Ansprüche 1 bis 4, bei dem das Antwortintegral J des Sensors durch Folgendes berechnet wird:

$$J = \int_F X(f)\cos(2\pi f n T)df$$

wobei T die Grundresonanzschwingung des Gases und n die gewählte harmonische Ordnung ist, und wobei F die Frequenzbreite der Empfindlichkeit des Sensors ist und X(f) eine reelle Kurve ist, in der die Resonanzen des Gases alleine und gleichgerichtet auftreten, wobei die Resonanzen des Schallwandlers (5), der Schicht (6) und des Behälters (1) entfernt sind, und wobei J den Druck repräsentiert, wobei der Druck durch Kalibrierung abgeleitet werden kann.

6. Verfahren nach einem der Ansprüche 1 bis 5, bei dem die Breite des Frequenzbands derart ist, dass wenigstens zwei und vorzugsweise etwa zehn Resonanzen des Gases erzeugt werden.

**Claims**

1.  A method for measuring at least one physical parameter on a housing (1) filled with a gas (2), the measurement being carried out via an acoustic sensor,

    the acoustic sensor comprising at least one transducer (5), an electrical system (8) connected to the transducer (5) and a coupling layer (6) for coupling the transducer (5) to the housing (1),

    the method including the steps of:

    - generating, using the transducer (5), an excitation acoustic signal that vibrates the housing (1) and the gas (2) in a wide frequency band,
    - detecting, using the transducer (5), a response acoustic signal characteristic of the vibrations of the housing and the gas;
    - analyzing the response electric signals from the transducer (5) using the electric system (8);

    the method being **characterized in that** it includes the steps of using the electrical system (8) for:

    - measuring the amplitudes of the electric response signals from the transducer (5) in order to determine all of the resonant frequencies of the gas (2);
    - extracting the resonant frequencies of the gas from the set of resonant frequencies of the sensor;
    - measuring the gap between at least two resonant frequencies of the gas;
    - deriving, based on the measurement of said gas, the celerity c of the acoustic waves in the gas;
    - calculating the molar mass M of the gas by:

    $$M = \frac{\gamma RT}{c^2}$$

    where R is the constant of the ideal gases, T is the temperature and $\gamma$ is the ratio of the specific heats for the ideal gases; and/or

    - calculating the integral J of the real acoustic response signal X(f) of the gas in the housing, where X(f) is a real curve in which the resonances of the gas appear alone and rectified, the resonances of the transducer (5), the coupling layer (6) and the housing (1) being removed; and
    - also using the celerity derived in the preceding steps, deriving the pressure P of the gas from the calculation of the integral J, thanks to a prior calibration representing the curve J(P,c) for a gas with a known pressure and nature.

2.  Method according to claim 1, comprising, in the case where the electric system (8) excites the transducer (5) through a series of temporal pulses, a conversion step, in the space of the frequencies, by Fourier transformation, of the temporal electric signals from the transducer (5).

3.  Method according to claim 1 or 2, comprising a step for use of the property according to which resonance frequencies of the gas (2) in the housing (1) are periodic, to extract the resonance frequencies of the gas in the housing.

4.  Method according to one of claims 1 to 3, in which

    - if the sensor comprises a single transducer (5) working in reflection, the celerity c of the acoustic waves in the gas is derived by:

    $$c = 2D\Delta f$$

    where D is the inside dimension of the housing and where $\Delta f$ is the gap between two resonant frequencies of the gas, and;
    - if the sensor comprises two transducers (5) working in transmission, one transducer generating an acoustic signal propagating towards the housing (1) and another transducer detecting a response acoustic signal, the celerity c of the acoustic waves in the gas is derived by:

$$c = D\Delta f.$$

5. Method according to one of claims 1 to 4, in which the integral J of the response of the sensor is calculated by:

$$J = \int_F X(f)\cos(2\pi fnT)df$$

with T, fundamental resonance period of the gas and n, order of the chosen harmonic;
where F is the sensitivity frequency width of the sensor and where X(f) is a real curve in which resonances of the gas appear alone and rectified, the resonances of the transducer (5), the coupling layer (6) and the housing (1) being removed,
J being significant of the pressure which can be derived by calibration.

6. Method according to one of claims 1 to 5, in which the frequency band width is such that at least two resonances, and preferably of the order of 10 resonances of the gas are generated.

## FIG.1A    FIG.1B

## FIG.2

FIG.3A

FIG.3B

Etape 41
Mesure V (f)

Etape 42
Mesure V (t)
->V (f) par FFT

Etape 43
Spectre V (f)
complexe

Etape 53
Célérité
des ondes

Etape 63
Masse
molaire

Etape 44
Spectre X (f)
réel

Etape 54
Intégrale J

Etape 64
Pression

## FIG.4

Exemple d'étalonnage

FIG.5

**EP 2 115 451 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2739925
- WO 0073781 A